# Europäisches Patentamt
# European Patent Office
# Office européen des brevets

(19)

(11) Veröffentlichungsnummer: **0 101 061**
**B1**

(12)

# EUROPÄISCHE PATENTSCHRIFT

(45) Veröffentlichungstag der Patentschrift:
**01.06.88**

(51) Int. Cl.⁴: **C 09 B 67/10**

(21) Anmeldenummer: **83107881.1**

(22) Anmeldetag: **10.08.83**

(54) Verfahren zur Herstellung eines organischen Pigments auf Basis 4,4',7,7'-Tetrachlorthioindigo.

(30) Priorität: **13.08.82 DE 3230125**

(43) Veröffentlichungstag der Anmeldung:
**22.02.84 Patentblatt 84/8**

(45) Bekanntmachung des Hinweises auf die Patenterteilung:
**01.06.88 Patentblatt 88/22**

(84) Benannte Vertragsstaaten:
**CH DE FR LI**

(56) Entgegenhaltungen:
**EP - A - 0 056 868**
**DE - B - 1 115 711**
**DE - C - 243 087**
**FR - A - 2 300 117**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT,
Postfach 80 03 20, D-6230 Frankfurt am Main 80 (DE)**

(72) Erfinder: **Spietschka, Ernst, Dr., Kirchweg 3,
D-6270 Idstein/Taunus (DE)**
Erfinder: **Urban, Manfred, Steigerwaldstrasse 2a,
D-6200 Wiesbaden (DE)**

**Beschreibung**

Es ist bekannt, dass man 4,4',7,7'-Tetrachlorthioindigo durch Oxidation von 4,7-Dichlor-3-hydroxythionaphthen mit Luft, Kaliumdichromat oder -cyanoferrat (III) oder Eisen (III)-chlorid (DT-PS 194 237) bzw. mit Natriumperoxodisulfat (DT-PS 2 504 935) oder auch durch Behandlung von 2,5-Dichlorphenylthioglykolsäure mit Chlorsulfonsäure (DT-PS 241 910) herstellen kann. Während die nach DT-PS 194 237 hergestellten Pigmente bereits in feinverteilter Form anfallen, bedürfen die nach DT-PS 241 910 hergestellten Pigmente einer zusätzlichen Feinverteilung nach bekannten Methoden, beispielsweise einer Salzvermahlung und gegebenenfalls einer anschliessenden Lösemittelbehandlung. Es ist ferner bekannt, dass man ein hervorragendes 4,4',7,7'-Tetrachlorthioindigo-Pigment erhält, wenn man 4,4',7,7'-Tetrachlorthioindigo mit einer Reinheit von mindestens 80%, vorzugsweise über 90%, in Chlorsulfonsäure löst, die so erhaltene Lösung bei Temperaturen unterhalb 20°C hydrolysiert, den gebildeten Niederschlag isoliert und unter Zusatz eines organischen Lösemittels nachbehandelt (DE-OS 2 504 962). Die zur Lösung des Rohproduktes erforderliche Menge an Chlorsulfonsäure ist abhängig von der Reinheit des eingesetzten Tetrachlorthioindigos. Als organische Lösemittel können hierbei u.a. Benzol, niedere Alkylbenzole, wie Toluol, Xylol, Äthylbenzol, ferner aromatische Chlorkohlenwasserstoffe, wie beispielsweise Chlorbenzol, Dichlorbenzole, Trichlorbenzole und deren Gemische eingesetzt werden. Die Nachbehandlung erfolgt bei Temperaturen von etwa 20 bis etwa 180°C.

In der Europäischen Patentanmeldung 0 056 868 wird die wässrig-alkalische Oxidation des 4,7-Dichlor-3-hydroxy-thionaphthens bzw. der Mischung aus 4,7-Dichlor-3-hydroxy-thionaphthen und 4,4',7,7'-Tetrachlorthioindigo in Gegenwart von aromatischen organischen Lösungsmitteln (beispielsweise Nitrobenzol) mit Nitrobenzolsulfonsäure-Salzen zum 4,4',7,7'-Tetrachlorthioindigo-Pigment beschrieben, wobei die Zwischenstufe des Rohpigments nicht isoliert wird. Es handelt sich hierbei also um eine chemische Reaktion und einer Rekristallisation, d.h. um ein kombiniertes Oxidations- und Rekristallisationsverfahren.

Im Zuge der weiteren Entwicklung wurde nun gefunden, dass man ein Pigment mit extrem verbessertem Fliessverhalten bei hoher Pigmentkonzentration herstellen kann, indem man ein beliebiges feinteiliges 4,4',7,7'-Tetrachlorthioindigo-Rohpigment in wasserfreier Form mit Nitroaromaten bei Temperaturen von 50 bis 180°C, vorzugsweise 100–150°C, behandelt. Das so erhältliche Pigment zeichnet sich ausserdem durch eine hervorragende Flockungsstabilität aus.

Unter Nitroaromaten, die verfahrensgemäss eingesetzt werden, sind hierbei solche zu verstehen, die wasserdampfflüchtig sind und einen Schmelzpunkt von 50°C oder darunter bei Normalbedingungen aufweisen, wie beispielsweise Nitrobenzol, Nitrotoluole, Nitroxylol, Nitroanisol oder Nitrophenol. Unter dem Begriff «wasserfreier Form» ist zu verstehen, dass die Behandlung des 4,4',7,7'-Tetrachlorthioindigo-Rohpigments mit den genannten Nitroaromaten in Abwesenheit von Wasser erfolgt. Dies kann beispielsweise erreicht werden, in dem man entweder von einem getrockneten Rohpigment ausgeht oder aus dem Rohpigment das Wasser bei niederen Temperaturen destillativ entfernt. Es können auch vor, während oder nach der Lösemittelbehandlung oberflächenaktive Verbindungen zugesetzt werden.

Beispiel 1:
30 Gewichtsteile 4,4',7,7'-Tetrachlorthioindigo-Rohpigment (hergestellt nach DT-PS 241 910 mit zusätzlicher Salzvermahlung Natriumsulfat 1:5) werden bei Raumtemperatur in 300 Gewichtsteile Nitrobenzol eingetragen. Man erhitzt auf 150°C und rührt 3 Stunden bei dieser Temperatur nach. Man lässt auf 90°C abkühlen, gibt 50 Teile Wasser hinzu und destilliert das Nitrobenzol mit Wasserdampf ab. Danach wird das Pigment abgesaugt und getrocknet. Man erhält 29,4 Gewichtsteile Pigment, das sich durch seine niedrige Viskosität und hervorragende Flockungsstabilität in Lacken bei hohen Pigmentkonzentrationen auszeichnet.

Beispiel 2:
30 Gewichtsteile 4,4',7,7'-Tetrachlorthioindigo-Rohpigment (hergestellt durch Umfällung aus Chlorsulfonsäure nach DE-OS 2 504 962) werden bei Raumtemperatur in 300 Gewichtsteile Nitrobenzol eingetragen. Man erhitzt auf 150°C und rührt 3 Stunden bei dieser Temperatur nach. Anschliessend lässt man auf 90°C abkühlen, gibt 50 Teile Wasser hinzu und destilliert das Nitrobenzol mit Wasserdampf ab. Danach wird das Pigment abgesaugt und getrocknet. Man erhält 29,2 Gewichtsteile Pigment, das sich durch seine niedrige Viskosität und hervorragende Flockungsstabilität in Lacken bei hohen Pigmentkonzentrationen auszeichnet.

Beispiel 3:
30 Gewichtsteile 4,4',7,7'-Tetrachlorthioindigo-Rohpigment (hergestellt nach DT-PS 2 504 935) werden bei Raumtemperatur in 300 Gewichtsteile Nitrobenzol eingetragen. Man erhitzt auf 100°C, hält 3 Stunden bei dieser Temperatur und rührt anschliessend 3 Stunden bei 150°C nach. Man lässt auf 90°C abkühlen, gibt 50 Teile Wasser hinzu und destilliert das Nitrobenzol mit Wasserdampf ab. Danach wird das Pigment abgesaugt und getrocknet. Man erhält 29,5 Gewichtsteile Pigment, das sich durch seine niedrige Viskosität und hervorragende Flockungsstabilität in Lacken bei hohen Pigmentkonzentrationen auszeichnet.

Beispiel 4:
30 Gewichtsteile 4,4',7,7'-Tetrachlorthioindigo-Rohpigment (hergestellt nach DT-PS 2 504 935) werden bei Raumtemperatur in 300 Gewichtsteile Nitrobenzol eingetragen. Man erhitzt auf 150°C und rührt 3 Stunden bei dieser Temperatur nach. Anschliessend lässt man auf Raumtemperatur abkühlen, saugt ab und wäscht mit Methanol nitrobenzolfrei. Nach dem Trocknen erhält man 29,1 Gewichtsteile Pigment, das sich durch seine niedrige Viskosität und hervorragende Flockungsstabilität in Lacken bei hohen Pigmentkonzentrationen auszeichnet.

Beispiel 5:

30 Gewichtsteile 4,4',7,7'-Tetrachlorthioindigo-Rohpigment (hergestellt nach DT-PS 2 504 935) werden in Form des feuchten Presskuchens in 300 Gewichtsteile Nitrobenzol eingeführt und bei 30 °C 20 Torr wasserfrei destilliert und anschliessend 2 Stunden auf 150 °C erhizt. Man lässt auf 90 °C abkühlen, gibt 50 Teile Wasser hinzu und destilliert das Nitrobenzol mit Wasserdampf ab. Danach wird das Pigment abgesaugt und getrocknet. Man erhält 29,3 Gewichtsteile Pigment, das sich durch seine niedrige Viskosität und hervorragende Flokkungsstabilität in Lacken bei hohen Pigmentkonzentrationen auszeichnet.

Beispiel 6:

Verfährt man, wie in Beispiel 1 beschrieben, ersetzt jedoch das Nitrobenzol durch die gleiche Menge Nitrotoluol, so erhält man 29,3 Gewichtsteile Pigment, das sich durch seine niedrige Viskosität und hervorragende Flockungsstabilität in Lakken bei hohen Pigmentkonzentrationen auszeichnet.

**Patentansprüche**

1. Verfahren zur Herstellung eines 4,4',7,7'-Tetrachlorthioindigo-Pigments, dadurch gekennzeichnet, dass man ein feinteiliges 4,4',7,7'-Tetrachlorthioindigo-Rohpigment in wasserfreier Form mit einem Nitroaromaten, der wasserdampfflüchtig ist und einen Schmelzpunkt von 50 °C oder darunter bei Normalbedingungen aufweist, bei Temperaturen von 50 bis 180 °C behandelt.

2. Verfahren nach Anspruch 1, dadurch gekennzeichnet, dass man die Behandlung des Rohpigments bei Temperaturen von 100 bis 150 °C vornimmt.

3. Verfahren nach Anspruch 1 oder 2, dadurch gekennzeichnet, dass man als Nitroaromat Nitrobenzol verwendet.

**Claims**

1. A process for the preparation of 4,4',7,7'-tetrachloro-thioindigo pigment which comprises treating a finely divided crude 4,4',7,7'-tetrachloro-thioindigo pigment in anhydrous form at temperatures of from 50 to 180 °C with a nitroaromatic substance which is volatile in steam and has a melting point of 50 °C or below under normal conditions.

2. The process as claimed in Claim 1, which comprises treating the crude pigment at temperatures of from 100 to 150 °C.

3. The process as claimed in Claim 1 or 2, which comprises using nitrobenzene as nitroaromatic substance.

**Revendications**

1. Procédé pour préparer un pigment de tétrachloro-4,4',7,7' thio-indigo, procédé caractérisé en ce qu'on traite à des températures de 50 à 180 °C un pigment brut de tétrachloro-4,4',7,7' thio-indigo, sous la forme de fines particules et à l'état anhydre, par un composé aromatique nitré qui est entraînable à la vapeur d'eau et qui, dans les conditions normales, a un point de fusion d'au plus 50 °C.

2. Procédé selon la revendication 1, caractérisé en ce qu'on effectue le traitement du pigment brut à des températures de 100 à 150 °C.

3. Procédé selon l'une des revendications 1 et 2, caractérisé en ce qu'on utilise le nitrobenzène comme composé aromatique nitré.